# EUROPÄISCHE PATENTSCHRIFT

(11) **EP 0 733 646 B1**
(45) Veröffentlichungstag und Bekanntmachung des Hinweises auf die Patenterteilung: **25.07.2001**
(21) Anmeldenummer: 95106280.1
(22) Anmeldetag: 26.04.1995
(51) Int. Cl.: C08B 30/04, A21D 2/00, A23J 1/12

(54) **Verfahren zur Trennung einer Suspension aus einem Getreidemehlprodukt**
Process for the fractionating of a suspension from grain flour
Procédé pour le fractionnement d'une suspension d'une farine de céréales

(30) Priorität: 22.03.1995 EP 95104237
(43) Veröffentlichungstag der Anmeldung: 25.09.1996
(73) Patentinhaber: Flottweg GmbH, D-84137 Vilsbiburg (DE)
(72) Erfinder: Severs, Jaap B. Sc, 1217 AD Hilversum (NL)
(74) Vertreter: Flügel, Otto, Dipl.-Ing.

(56) Entgegenhaltungen:
- EP-A- 0 221 427
- DE-A- 2 612 696
- DE-A- 3 344 432
- DE-A- 4 329 111
- DATABASE WPI Week 7502 Derwent Publications Ltd., London, GB; AN 3389W XP002013444 & SU-A-418 526 (MATOV B M ET AL.) , 2.August 1974

## Beschreibung

Die Erfindung betrifft ein Verfahren zur Trennung einer Suspension aus einem Getreidemehlprodukt und einer Flüssigkeit, vorzugsweise Wasser, in eine Feststoffphase aus Getreidestärke, eine schwere Flüssigphase aus Getreidekleber und Feinstärke und eine leichte Flüssigphase aus Wasser und löslichen Bestandteilen, bei dem die Suspension einer Dreiphasenzentrifuge zugeführt wird, in welcher die Feststoffphase über eine Förderschnecke ausgetragen wird.

Aus dem Stand der Technik sind verschiedene Verfahren zur gleichzeitigen Gewinnung von Weizenstärke und Weizenkleber bekannt. Beispielsweise offenbart die EP 0 221 427 B1 ein Verfahren zur gleichzeitigen Gewinnung von Weizenstärke und Weizenkleber aus trockenen Weizenmehlprodukten mittels eines Zentrifugalverfahrens. Bei diesem Verfahren wird aus trockenen Weizenmehlprodukten und Wasser eine grobdisperse Mehlprodukt-Wasser-Mischung hergestellt, welche naßmechanisch, nachzerkleinernd zu einer glatten, fließfähigen Mehl-Wasser-Mischung verarbeitet und auf eine Temperatur von 20° bis 50° C eingestellt und unter mäßigem Rühren einer Ruhepause von 5 bis 120 min. unterzogen wird. Diese im wesentlichen klumpenfreie Mehl-Wasser-Mischung wird anschließend einer einstufigen Dreiphasen-Stromklassierung in einem zentrifugalen Trennraum einer Schneckenzentrifuge zugeführt, wobei an der Peripherie des zentrifugalen Trennraumes kontinuierlich eine schwere Fugatfraktion aus Weizenkleber und geringen Mänge Weizenstärke, an der inneren Oberfläche des hohlzylinderischen Produktringes eine leichte Fugatfraktion aus kolloidal gelösten Mehlinhaltsstoffen und geringen Menge feinkörniger Stärke und aus dem zentrifugalen Trennraum durch die Zentrifugenschnecke sedimentierte Grobkornstärke abgezogen wird.

Demzufolge wird zur gleichzeitigen Trennung der oben genannten Komponenten eine Dreiphasen-Dekantierzentrifuge verwendet, wobei die Suspension aus dem Getreidemehlprodukt und der Flüssigkeit in einem Vorverfahren auf den Trennungsschritt in der Zentrifuge vorbereitet werden muß, indem eine naßmechanische Aufbereitung und eine anschließende Rührphase notwendig ist. In der Dreiphasen-Dekantierzentrifuge wird die Suspension in sedimentierende Grobkornstärke als Feststoffaustrag, in eine Weizenkleber-Feinstärke-Mischung enthaltende schwere Flüssigphase und in eine leichte Flüssigphase getrennt, die aus Wasser und im wesentlichen kolloidal gelösten Mehlinhaltsstoffen besteht. Die beiden unterschiedlich schweren und in ihren Viskositäten erheblich voneinander differierenden Flüssigphasen fließen über sog. Wehre ab, die auf unterschiedliche Durchmesser eingestellt sind. Das Abfließen der Flüssigphasen erfolgt im sog. freien Gefälle aus der Dreiphasen-Dekantierzentrifuge.

Ein derartiges Trennverfahren ist beispielsweise aus der DE-AS 1 257 686 vorbekannt. Diese Druckschrift offenbart eine Vollmantel-Schneckenzentrifuge, die eine Schleudertrommel mit Austragsöffnungen für die Feststoffanteile des Schleudergutes und zwei Überlaufwehre für zwei Flüssigphasen aufweist.

Die Verarbeitung von Suspensionen aus einem Getreidemehlprodukt und einer Flüssigkeit erfordert die Einhaltung vorgegebener Qualitätskriterien der drei abzutrennenden Phasen in der Dreiphasenzentrifuge mit freiem Gefälleablauf der beiden Flüssigphasen. Um Qualitätsschwankungen der in die Dreiphasenzentrifuge einlaufenden Suspension zu vermeiden, sieht daher das aus der EP 0 221 427 B1 vorbekannte Verfahren die naßmechanische Aufbereitung und die Rührphase vor der Trennung der Phasen vor. Dennoch können schwankende Zulaufqualitäten der Suspension mit diesem vorbekannten Verfahren, welches darüber hinaus durch die Vorverfahren sehr aufwendig ist, nicht vermieden werden. Daher ist es aus dem Stand der Technik bekannt, bei den Dreiphasenzentrifugen der hier in Rede stehenden Art schwankende Zulaufqualitäten durch Änderungen der Teichtiefen auszugleichen. Hierbei handelt es sich um die Einstellung der beiden Wehre, wie sie in der DE-AS 1 257 686 beschrieben sind. Die Wehre werden auf die Zulaufqualität der Suspension, d. h. auf die unterschiedlich schweren und in ihren Viskositäten erheblich voneinander differierenden Flüssigphasen eingestellt, um hinsichtlich der Qualität der Phasen Homogenität zu erzielen. Hierzu ist es jedoch bei einer Vollmantel-Schneckenzentrifuge gem. der DE-AS 1 257 686 notwendig, daß die Zentrifuge stillgesetzt und eine geeignete Teichtiefen-Einstellung abgeschätzt wird, bevor der Trennvorgang mit der Zentrifuge aufgenommen wird. Erfahrungsgemäß kommt es hierbei zu einer Vielzahl von Teichtiefen-Einstellungen, die aufgrund abweichender Zulaufqualitäten wiederholt werden müssen. Für den Produktionsbetrieb stellt diese Vorgehensweise ein zeitaufwendiges Verfahren dar, zumal mit geänderter Teichtiefeneinstellung nach dem Wiederanfahren der Zentrifuge längerfristige Beobachtungszeiten erforderlich sind, um zu beurteilen, daß die eingestellten Teichtiefen die erforderlichen Qualitäten der drei abzutrennenden Phasen bereitstellen.

Ausgehend von dem voranstehend beschriebenen Stand der Technik liegt der Erfindung die **Aufgabe** zugrunde, ein gattungsgemäßes Verfahren zu schaffen, mit dem eine hochviskose Getreidekleber-Feinstärkephase aus einer Suspension aus einem Getreidemehlprodukt und einer Flüssigkeit mit hoher Qualität und großer Ausbeute abgetrennt werden kann, ohne daß die Suspension zuvor in zeitintensiven Rühr- und/oder Absetzphasen vorbereitet werden muß.

Die **Lösung** dieser Aufgabenstellung sieht vor, daß die schwere Flüssigphase über ein Schälsystem einer Dreiphasen-Dekantierzentrifuge aufgeschlossen und aus der Dreiphasen-Dekantierzentrifuge abgeführt wird, während das Wasser der leichten Flüssigphase über ein weiteres Trennsystem, insbesondere ein zweites Schälsystem, abgeführt wird oder in der Wehreinrichtungen oder dergleichen die Dreiphasen-Dekantierzentrifuge in freiem Gefälle verläßt, wobei zwischen einer verstellbaren Schälscheibe des ersten Schälsystems und der Zentrifugentrommel eine hohe Differenz der Relativgeschwindigkeit eingestellt wird.

Das erfindungsgemäße Verfahren zur Trennung einer Suspension aus einem Getreidemehlprodukt und einer Flüssigkeit sieht somit vor, daß die Suspension von der oder den Aufschlußmaschinen direkt zu der Dreiphasen-Dekantierzentrifuge mit einem Schälsystem für die schwere Flüssigphase, bestehend aus einer Kleber-Feinstärkemischung gepumpt und in ihr getrennt wird, wobei das Schälsystem zur weitergehenden Aufschließung des Getreideklebers und seiner Abförderung aus der Dreiphasen-Dekantierzentrifuge dient, während die Flüssigkeit mit den löslichen Anteilen über ein weiteres Trennsystem, insbesondere ein zweites Schälsystem abgefördert wird. Beispielsweise kann die Flüssigkeit auch über Wehrplatten oder Wehrscheiben in freiem Gefälle die Dreiphasen-Dekantierzentrifuge verlassen. Das erfindungsgemäße Verfahren sieht somit die Verwendung einer Dreiphasen-Dekantierzentrifuge mit zumindest einer Schäleinrichtung vor, mit der die hochviskose Getreidekleber-Feinstärkephase als schwere Flüssigphase aufgeschlossen und abgetrennt wird. Diese Schäleinrichtung schafft infolge der hohen Relativgeschwindigkeit zwischen der Schälscheibe und der insbesondere mit hoher Drehzahl umlaufenden Zentrifugentrommel Qualitätsverbesserungen und Ausbeuteerhöhungen, die beim Stand der Technik nur dadurch erreicht werden können, daß eine angepaßte Rühr- und/oder Verweilzeit und/oder ein Homogenisator eingesetzt werden.

In besonders vorteilhafter Weise ist nach einem weiteren Merkmal der Erfindung vorgesehen, daß die Schälscheibe feststeht, so daß eine für Dekantierzentrifugen relativ geringe Umlaufgeschwindigkeit der Zentrifugentrommel ausreicht um die erforderliche große Differenz der Relativgeschwindigkeit zwischen der Zentrifugentrommel und der Schälscheibe zu erzielen.

Nach einem weiteren Merkmal der Erfindung ist vorgesehen, daß durch die hohe Differenz der Relativgeschwindigkeit zwischen der Schälscheibe und der Zentrifugentrommel eine Zentrifugalbeschleunigung in den Verbindungskanälen zwischen dem Trennraum und dem Schälraum sowie im Schälraum erzeugt wird, die insbesondere im hochturbulenten Schälraum eine Qualitätsverbesserung und eine Ausbeuteerhöhung des abzutrennenden Produktes, nämlich des Getreideklebers und/oder der Getreidestärke erzielt. Die im Schälraum der Dreiphasen-Dekantierzentrifuge mit Schäleinrichtung für das Abführen der schweren Flüssigphase herrschenden Turbulenzen und Drücke haben homogenisierende und aufschließende Wirkung, wie sie üblicherweise nur mit Aufschlußmaschinen und/oder Verweilzeit-Reaktionsmischtanks für die Teighomogenisierung zwischen der Knetmaschine bzw. dem Teigmischer und der Trenneinrichtung am Beginn des Naßverfahrens für die Gewinnung von Getreidestärke und Getreidekleber erzielt wird. Die Klebermatrix nimmt in dieser Arbeitsphase weiteres Wasser auf, so daß der Aufquellprozeß unterstützt wird und der Anteil des qualitativ hochwertigen Getreideklebers ansteigt. Mit den voranstehenden Dekantierzentrifugen sind am Trommelmantel Drücke zwischen 5 und 15 bar erreichbar.

Bei der Verwendung einer Dreiphasen-Dekantierzentrifuge mit verstellbarer Schäleinrichtung wird die Möglichkeit geschaffen, die Qualität des Getreideklebers in der schweren Flüssigphase in Abhängigkeit der Zuflußqualitäten der Suspension einzustellen. Hierbei hat es sich bei einer ersten Ausführungsform des erfindungsgemäßen Verfahrens als vorteilhaft erwiesen, die Schälscheibe in ihrem Schäldurchmesser in Abhängigkeit des auf die Schäleinrichtung wirkenden Drehmomentes einzustellen. Alternativ hierzu kann vorgesehen sein, daß das am Schälsystem wirkende Drehmoment über eine Verstellung der Drehzahl der Zentrifugentrommel geregelt wird. Hierbei ist es vorteilhaft, die Drehzahlregelung der Zentrifugentrommel automatisch durchzuführen, so daß manuelle Eingriffe zur Steuerung der Drehzahl der Zentrifugentrommel nicht notwendig sind, ohne daß Qualitätseinschränkungen entstehen.

Die Temperatur des die Dreiphasen-Dekantierzentrifuge verlassenden Getreideklebers (Gluten) wird nach einem weiteren Merkmal der Erfindung überwacht und als Wert für die Regelung des am Schälsystem wirkenden Drehmomentes herangezogen, wobei bei Erreichen einer vorbestimmten Temperatur unterhalb der Verkleisterungstemperatur des Getreideklebers der Durchsatz der Dreiphasen-Dekantierzentrifuge erhöht und/oder die Drehzahl der Zentrifugentrommel reduziert wird. Hierdurch werden Betriebsunterbrechungen vermieden, ohne die Getreidekleberqualität negativ zu beeinflussen.

Es ist ferner vorgesehen, daß das am Schälsystem wirkende Drehmoment der schweren Flüssigphase kontinuierlich gemessen wird,. Vorzugsweise wird das am Schälsystem wirkende Drehmoment über eine Veränderung des Dreiphasen-Dekantierzentrifugendurchsatzes, insbesondere automatisch, geregelt.

Selbstverständlich ist es auch möglich, anstelle der voranstehend beschriebenen automatischen Regelungen ein manuelles Verstellen des Schäldurchmessers vorzusehen.

## Patentansprüche

1. Verfahren zur Trennung einer Suspension aus einem Getreidemehlprodukt und einer Flüssigkeit, vorzugsweise Wasser, in eine Feststoffphase aus Getreidestärke, eine schwere Flüssigphase aus Getreidekleber und Feinstärke und eine leichte Flüssigphase aus Wasser und löslichen Bestandteilen, bei dem die Suspension einer Dreiphasenzentrifuge zugeführt wird, in welcher die Feststoffphase über eine Förderschnecke ausgetragen wird,
**dadurch gekennzeichnet**,
daß die schwere Flüssigphase über ein Schälsystem einer Dreiphasen-Dekantierzentrifuge aufgeschlossen und aus der Dreiphasen-Dekantierzentrifuge abgeführt wird, während das Wasser der leichten Flüssigphase über ein weiteres Trennsystem, insbesondere ein zweites Schälsystem abgeführt wird oder über Wehreinrichtungen die Dreiphasen-Dekantierzentrifuge in freiem Gefälle verläßt, wobei zwischen einer verstellbaren Schälscheibe des ersten Schälsystems und der Zentrifugentrommel eine hohe Differenz der Relativgeschwindigkeit eingestellt wird.

2. Verfahren nach Anspruch 1,
**dadurch gekennzeichnet**,
daß die Schälscheibe feststeht.

3. Verfahren nach Anspruch 1,
**dadurch gekennzeichnet**,
daß durch die hohe Differenz der Relativgeschwindigkeit zwischen der Schälscheibe und der Zentrifugentrommel eine Zentrifugalbeschleunigung in den Verbindungskanälen zwischen dem Trennraum und dem Schälraum sowie im Schälraum mit großen Turbulenzen und Druckunterschieden erzeugt wird.

4. Verfahren nach Anspruch 1,
**dadurch gekennzeichnet**,
daß die Schälscheibe in ihrem Schäldurchmesser in Abhängigkeit des auf die Schäleinrichtung wirkenden Drehmomentes eingestellt wird.

5. Verfahren nach Anspruch 1,
**dadurch gekennzeichnet**,
daß eine Temperatur unterhalb der Verkleisterungstemperatur in der Dreiphasen-Dekantierzentrifuge eingestellt wird.

6. Verfahren nach Anspruch 4,
**dadurch gekennzeichnet**,
daß das am Schälsystem wirkende Drehmoment der schweren Flüssigphase kontinuierlich gemessen wird.

7. Verfahren nach Anspruch 4,
**dadurch gekennzeichnet**,
daß das am Schälsystem wirkende Drehmoment über eine Verstellung der Drehzahl der Zentrifugentrommel geregelt wird.

8. Verfahren nach Anspruch 7,
**dadurch gekennzeichnet**,
daß die Drehzahlregelung der Zentrifugentrommel automatisch erfolgt.

9. Verfahren nach Anspruch 4,
**dadurch gekennzeichnet**,
daß das am Schälsystem wirkende Drehmoment über eine Veränderung des Dreiphasen-Dekantierzentrifugendurchsatzes, vorzugsweise automatisch, geregelt wird.

10. Verfahren nach einem der Ansprüche 1 bis 9,
**dadurch gekennzeichnet,**
daß die Austrittstemperatur des Getreideklebers überwacht und als Wert für die Regelung des am Schälsystem wirkenden Drehmomentes herangezogen wird, wobei bei Erreichen einer vorbestimmten Temperatur unterhalb der Verkleisterungstemperatur des Getreideklebers der Durchsatz der Dreiphasen-Dekantierzentrifuge erhöht und/oder die Drehzahl der Zent:rifugentrommel reduziert wird.

## Claims

1. A process for separating a suspension formed from a cereal flour product and a fluid, preferably water, into a solid phase of cereal starch, a heavy fluid phase of cereal gluten and a fine starch and a light fluid phase of water and soluble components, wherein the suspension is placed in a three-phase centrifuge from which the solid phase is discharged via a conveyor worm, characterised in that the heavy fluid phase is broken down via a removal system of a three-phase decanting centrifuge and is discharged from the decanting centrifuge, whilst the water of the light fluid phase is discharged via a further separating system, especially a second removal system, or leaves the three-phase centrifuge via weir apparatus in free-fall, wherein a high difference of relative speed is set between an adjustable removal disc of the first removal system and the centrifuge drum.

2. A process according to claim 1, characterised in that the removal disc is fixed.

3. A process according to claim 1, characterised in that a centrifugal acceleration is produced, with great turbulence and pressure differences, in the connection channels between the separation area and the removal area and also in the removal area as a result of the great difference in relative speed between the removal disc and the centrifuge drum.

4. A process according to claim 1, characterised in that the removal diameter of the removal disc is set dependent on the torque acting upon the removal apparatus.

5. A process according to claim 1, characterised in that a temperature is set in the three-phase decanting centrifuge which is below the glutinisation temperature.

6. A process according to claim 4, characterised in that the torque of the heavy fluid phase acting upon the removal system is continually measured.

7. A process according to claim 4, characterised in that the torque acting upon the removal system is controlled via an adjustment of the centrifuge drum.

8. A process according to claim 7, characterised in that speed control of the centrifuge drum is automatic.

9. A process according to claim 4, characterised in that the torque acting upon the removal system is controlled, preferably automatically, via an adjustment of the throughput through the three-phase decanting centrifuge.

10. A process according to one of claims 1 to 9, characterised in that the output temperature of the cereal gluten is monitored and used as a value for controlling the torque acting upon the removal system, wherein on reaching a pre-determined temperature below the glutinisation temperature of the cereal gluten; the throughput of the three-phase decanting centrifuge is increased and/or the speed of the centrifuge drum is reduced.

## Revendications

1. Procédé de séparation d'une suspension constituée d'un produit de farine de céréales et d'un liquide, de préférence d'eau, en une phase solide constituée d'amidon de céréales, une phase liquide lourde constituée de gluten de céréales et d'amidon fin et une phase liquide légère constituée d'eau et de constituants solubles, dans lequel on introduit la suspension dans une centrifugeuse à trois phases, la phase solide étant extraite par une vis sans fin,
caractérisé en ce que
la phase liquide lourde est décomposée par un système de coupelles de centrifugeuse de décantation à trois phases, et retirée de la centrifugeuse de décantation à trois phases, tandis que l'eau de la phase liquide légère est conduite par un autre système de séparation, en particulier un second système de coupelles, ou quitte la centrifugeuse de décantation à trois phases par des dispositifs à déversoirs en écoulement libre, en établissant une grande différence de vitesse relative entre un disque à coupelles réglable du premier système de coupelles et le tambour centrifuge.

2. Procédé selon la revendication 1,
caractérisé en ce que
le disque à coupelles est fixe.

3. Procédé selon la revendication 1,
caractérisé en ce que
de par la différence élevée de vitesse relative entre le disque à coupelles et le tambour de centrifugation on produit une accélération centrifuge dans les canaux de liaison entre l'espace de séparation et l'espace des coupelles ainsi que dans l'espace des coupelles avec une grande turbulence et de grandes différences de pression.

4. Procédé selon la revendication 1,
caractérisé en ce que
le disque à coupelles est réglé quant au diamètre des coupelles en fonction du moment de rotation agissant sur le dispositif à coupelles.

5. Procédé selon la revendication 1,
caractérisé en ce qu'
on établit une température inférieure à la température de gélification dans la centrifugeuse à décantation à trois phases.

6. Procédé selon la revendication 4,
caractérisé en ce qu'
on mesure de façon continue le moment de rotation de la phase liquide lourde agissant sur le système de coupelles.

7. Procédé selon la revendication 4,
caractérisé en ce qu'
on règle le moment de rotation agissant sur le système de coupelles par un réglage de la vitesse de rotation du tambour centrifuge.

8. Procédé selon la revendication 7,
caractérisé en ce que
le réglage de la vitesse de rotation du tambour centrifuge s'effectue automatiquement.

9. Procédé selon la revendication 4,
caractérisé en ce qu'
on règle le moment de rotation agissant sur le système de coupelles en modifiant le débit de la centrifugeuse à décantation àtrois phases, de préférence de façon automatique.

10. Procédé selon l'une des revendications 1 à 9,
caractérisé en ce qu'
on surveille la température de sortie du gluten de céréales, et on l'utilise comme grandeur pour le réglage du moment de rotation agissant sur le système de coupelles, opération dans laquelle, lorsqu'on atteint une température prédéterminée en dessous de la température de gélification du gluten de céréales, on augmente le débit de la centrifugeuse de décantation à trois phases et/ou on réduit la vitesse de rotation du tambour centrifuge.
